# EUROPÄISCHE PATENTSCHRIFT

(11) **EP 0 983 731 B1**
(45) Veröffentlichungstag und Bekanntmachung des Hinweises auf die Patenterteilung: **29.10.2003**
(21) Anmeldenummer: 99113831.4
(22) Anmeldetag: 15.07.1999
(51) Int. Cl.: A23N 12/08

(54) **Vorrichtung zum Rösten, Trocknen und/oder Kühlen von Kaffeebohnen oder anderen kleinstückigen Produkten**
Device for roasting, drying and/or cooling coffee beans or other small-sized products
Dispositif pour griller, sècher et/ou refroidir des grains de café ou d'autres produits de petite taille

(30) Priorität: 04.08.1998 DE 29813928 U
(43) Veröffentlichungstag der Anmeldung: 08.03.2000
(73) Patentinhaber: Neuhaus Neotec Maschinen- und Anlagenbau GmbH, 21465 Reinbek (DE)
(72) Erfinder: Weilandt, Gerhard F., 21465 Reinbek (DE)
(74) Vertreter: Patentanwälte Hauck, Graalfs, Wehnert, Döring, Siemons, Schildberg

(56) Entgegenhaltungen:
- WO-A-98/31974
- DE-A- 3 116 723
- DE-A- 3 437 432
- DE-U- 29 715 637
- US-A- 5 185 171

## Beschreibung

Die Erfindung bezieht sich auf eine Vorrichtung zum Rösten, Trocknen und/oder Kühlen von Kaffeebohnen oder anderen kleinstückigen Produkten, beispielsweise Kakao oder Sesam.

Insbesondere für die Kaffeeröstung sind Vorrichtungen bekanntgeworden, bei denen zur Intensivierung des Wärmeübergangs das Röstgut in einem Rotations-Wirbelbett von einem Röstgas umspült wird. Beim Rotationsfließbett-Röster erzeugt das Röstgas zugleich das Rotations-Wirbelbett. Hierfür drückt das Röstgas durch eine perforierte Bodenwand in die Röstkammer und bildet dort mit dem Kaffee eine rotierende Wirbelschicht, deren Ausbildung durch die Ausgestaltung der Kammerwand unterstützt werden kann. In der DE 34 37 432 C2 ist ein solcher Kleinportionen-Kaffeeröster für Chargenbetrieb mit einer Fließbett-Röstkammer dargestellt, die hinsichtlich der Ausbildung des Rotations-Wirbelbettes und der Aussonderung unerwünschter Anteile der Charge optimiert ist. In der DE 31 16 723 ist eine mit geringem Energieverbrauch und kurzen Röstpausen auskommende Röstanlage beschrieben, in die eine solche Fließbett-Röstkammer integriert sein kann.

Bislang werden Vorrichtungen mit Fließbett-Röstkammern bevorzugt für die intensive Röstung während kurzer Röstzeiten von typischerweise 1,5 Minuten eingesetzt. Bei dieser Art der Röstung blähen sich die Kaffeebohnen stark auf, so daß sie eine geringe Dichte ("low density") aufweisen, und aufgrund einer hohen Porosität eine besonders hohe Extraktausbeute ("high yield") ermöglichen. Bei einer anderen Art der Röstung, die weniger intensiv und langwieriger ist, wobei die Röstzeiten typischerweise 3 bis 10 Minuten betragen, resultiert ein Kaffee hoher Dichte ("high density") mit niedriger Extraktausbeute ("low yield"). Die nach den verschiedenen Röstweisen hergestellten Kaffees unterscheiden sich geschmacklich, so daß manche Kaffeeröster oder Konsumenten die eine oder die andere Röstweise bevorzugen.

Grundsätzlich ist mittels einer Fließbett-Röstvorrichtung auch ein "high density"- und "low yield"-Kaffee herstellbar, indem die Röstgasmenge etwas reduziert und über längere Zeiten geröstet wird. Dann werden aber nur verhältnismäßig geringe Durchsatzleistungen erzielt. Dies gilt auch für Röster, bei denen das Rotations-Wirbelbett von einem Rührwerk erzeugt oder dessen Ausbildung von einem Rührwerk unterstützt wird.

Davon ausgehend liegt der Erfindung die Aufgabe zugrunde, eine Vorrichtung zum Rösten, Trocknen und/oder Kühlen von Kaffeebohnen oder kleinstückigen Produkten zu schaffen, die das Rösten, Trocknen und/oder Kühlen größerer Chargen über eine längere Dauer begünstigt. Diese Vorrichtung soll in der Lage sein, sowohl einen "low density" und "high yield" Kaffee in kurzer Zeit zu rösten, aber eben auch einen "high density" und "low yield" Kaffee in langer Röstzeit.

Die Aufgabe wird durch eine Vorrichtung mit den Merkmalen des Anspruches 1 gelöst. Vorteilhafte Ausgestaltungen der Vorrichtung sind in den Unteransprüchen angegeben.

Die erfindungsgemäße Vorrichtung zum Rösten, Trocknen und/oder Kühlen von Kaffeebohnen oder anderen kleinstückigen Produkten hat eine Kammer, in der mittels eines Gases und/oder eines Rührwerkes ein Rotations-Wirbelbett mit vertikalen Rotationsebenen erzeugt wird. Die kleinstückigen Produkte rotieren also in der Wirbelschicht auf Kreisbahnen, die jeweils in einer vertikalen Ebene liegen. Dabei hat die Kammer einen Einlaß und einen Auslaß zum Leiten eines Gases zum Rösten, Trocknen und/oder Kühlen und gegebenenfalls Erzeugen des Wirbelbettes im wesentlichen durch einen in Rotationsrichtung erstreckten ersten Wirbelbettabschnitt. Die Ausgestaltung von Einlaß, Auslaß bzw. der Kammer (insbesondere die Innenkontur desselben) kann die Ausbildung des Wirbelbettes und das Leiten des Gases im wesentlichen durch den ersten Wirbelbettabschnitt unterstützen. Ferner hat die Kammer in einem ersten Kammerabschnitt, der für die Aufnahme des ersten Wirbelbettabschnittes bestimmt ist, in senkrechter Richtung zu den Rotationsebenen des Wirbelbettes eine geringere Ausdehnung als in einem zweiten Kammerabschnitt, der für die Aufnahme des zweiten Wirbelbettabschnittes bestimmt ist, durch den das Gas im wesentlichen nicht geleitet wird.

Erfindungsgemäß wird im Vergleich zu bekannten Vorrichtungen mit Rotations-Wirbelbett eine Verkleinerung des Verhältnisses des Volumens des ersten Kammerabschnittes, in dem das Gas im wesentlichen in Kontakt mit dem kleinstückigen Produkt tritt, zum Volumen des zweiten Kammerabschnittes, in dem das Gas im wesentlichen nicht in Kontakt mit dem kleinstückigen Produkt tritt, erreicht. Wenn also das Volumen des ersten Kammerabschnittes etwa gleich groß wie bei bekannten Vorrichtungen mit Rotations-Wirbelbett gewählt wird, ist das Volumen des zweiten Kammerabschnittes größer als bei den bekannten Vorrichtungen und kann sogar wesentlich größer gewählt werden. Hierdurch ist zum einen bei Einsatz etwa desselben Röstgasstromes wie bei den bekannten Vorrichtungen eine sehr viel schonendere Kaffeeröstung möglich, da das Luft-/Kaffeeverhältnis kleiner ist, resp. wesentlich kleiner gewählt werden kann. Eine sehr viel größere Kaffeemenge befindet sich nämlich ständig in dem zweiten Kammerabschnitt, wo sie dem Röstgasstrom weniger ausgesetzt ist. Zudem ermöglicht dies eine erhebliche Vergrößerung der Charge, wodurch bei gesteigerten Bearbeitungszeiten sehr viel größere Leistungen erreicht werden. Hierdurch wird insbesondere die Röstung und Kühlung eines "high-density"- und "low-yield"-Kaffees begünstigt. Dabei kann die Erfindung sowohl bei Fließbett-Vorrichtungen als auch bei Vorrichtungen zum Einsatz kommen, bei denen die Ausbildung des Rotations-Wirbelbettes durch ein Rührwerk unterstützt oder allein bewirkt wird.

Der erste Kammerabschnitt dient bevorzugt der Aufnahme eines ersten Wirbelbettabschnittes, in dem die kleinstückigen Produkte im wesentlichen nach oben bewegt werden. Dann kann der erste Kammerabschnitt von einer durchlässigen Bodenwand der Kammer für den Einlaß des Gases, einer an diese angrenzenden, vertikalen Stirnwand und einem daran angrenzenden, konvexen Umlenkabschnitt einer Deckwand begrenzt sein. Der Auslaß für das Gas kann dann insbesondere an einem schachtartig neben dem Umlenkabschnitt hochragenden Kammerabschnitt ausgebildet sein.

Bevorzugt kann überdies der zweite Kammerabschnitt einem zweiten Wirbelbettabschnitt zugeordnet sein, in dem die kleinstückigen Produkte im wesentlichen eine Absinkbewegung ausführen. Dann kann der zweite Kammerabschnitt von einer geneigten, undurchlässigen zweiten Stirnwand begrenzt sein, entlang derer die kleinstückigen Produkte zu einer durchlässigen Bodenwand geführt werden können. Oberhalb des zweiten Kammerabschnitts kann der schachtartige Kammerabschnitt angeordnet sein, dessen Ausdehnung ebenfalls in senkrechter Richtung zu den Rotationsebenen des Wirbelbettes vergrößert sein kann, wodurch auch die Aussonderung unerwünschter Chargenbestandteile begünstigt werden kann.

Dabei kann die Kammer im Vertikalschnitt insbesondere eine Formgebung haben, wie sie anhand der Zeichnungen in der DE 34 37 432 C3 und der DE 31 16 723 C2 beschrieben ist. Überdies kann die erfindungsgemäße Vorrichtung in einer Anlage gemäß letztgenannter Patentschrift betrieben werden. Die durchlässige Bodenwand kann gemäß DE-U-297 15 637 ausgestaltet sein.

Darüber hinaus kann der erste Kammerabschnitt im Querschnitt (d.h. Horizontalschnitt) rechteckig sein und davon ausgehend der zweite Kammerabschnitt divergierende Seitenwände haben. Die Kammer kann aber auch insgesamt divergierende Seitenwände aufweisen und beispielsweise im Querschnitt ein Kreissegment oder ein Kreisringsegment bilden. Mehrere solcher Kreissegmente oder Kreisringsegmente können nebeneinander angeordnet sein. Das Volumen der Kammer kann zusätzlich noch dadurch gesteigert werden, daß die Seitenwände in einem Vertikalschnitt divergieren, d.h. seitlich ausgestellt sind. Zur Vergleichmäßigung der Strömung ist eine Unterteilung der Kammer in Segmente durch radiale Zwischenwände möglich.

Die Erfindung wird nachfolgend anhand der anliegenden Zeichnungen von fünf Ausführungsbeispielen näher erläutert. In den Zeichnungen zeigen:
- Fig. 1a bis d: eine Kammer der Vorrichtung mit rechteckigem Querschnitt im ersten Kammerabschnitt und divergierenden ebenen Seitenwänden im zweiten Kammerabschnitt in einer Stirnansicht (Fig. 1a), einem Vertikalschnitt (Fig. 1b), einer Draufsicht (Fig. 1c) und in einer Variante in verkleinerter Draufsicht (Fig. 1d);
- Fig. 2a bis c: kreisringsegmentförmige Kammer der Vorrichtung mit divergierenden ebenen Seitenwänden in einer Stirnansicht (Fig. 2a), einem Vertikalschnitt (Fig. 2b) und in einer Draufsicht (Fig. 2c);
- Fig. 3a bis c: eine Kammer der Vorrichtung mit divergierenden gewölbten Seitenwänden in einer Stirnansicht (Fig. 3a), einem Vertikalschnitt (Fig. 3b) und in einer Draufsicht (Fig. 3c);
- Fig. 4a bis c: eine Kammer der Vorrichtung mit divergierenden gewölbten Seitenwänden und einer konkaven zweiten Stirnwand in einer Stirnansicht (Fig. 4a), einem Vertikalschnitt (Fig. 4b) und in einer Draufsicht (Fig. 4c).

Bei der nachfolgenden Beschreibung der verschiedenen Ausführungsbeispiele werden für übereinstimmende Merkmale dieselben Bezugsziffern verwendet. Insoweit hat die Beschreibung für alle betroffenen Ausführungsbeispiele Gültigkeit. Sämtliche Ausführungsbeispiele können insbesondere, aber nicht ausschließlich, als Röst- oder Kühlkammern für Kaffee zum Einsatz kommen.

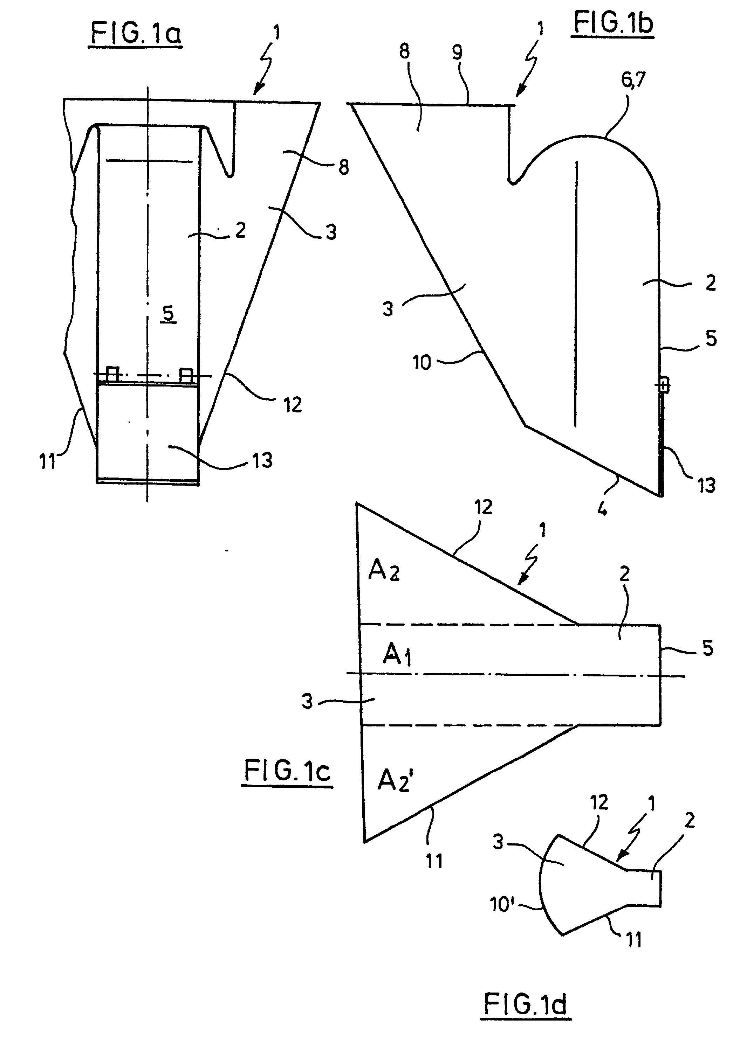

Gemäß Fig. 1a bis c hat die Kammer 1 einen ersten Kammerabschnitt 2 mit rechteckigem Querschnitt und einen zweiten Kammerabschnitt 3 mit gleichschenklig trapezförmigem Querschnitt.

Der erste Kammerabschnitt 2 ist unten von einer durchlässigen Bodenwand 4 begrenzt, die zum Teil auch den zweiten Kammerabschnitt 3 begrenzt und zur Horizontalen geneigt ist. Von der tiefsten Seite der durchlässigen Bodenwand 4 ragt eine den ersten Kammerabschnitt 2 begrenzende erste Stirnwand 5 vertikal empor. Von deren oberen Ende geht ein Umlenkabschnitt 6 einer Deckwand 7 aus, der den ersten Kammerabschnitt 2 vollständig und den zweiten Kammerabschnitt 3 teilweise überdeckt und zum Inneren dieser Kammerabschnitte hin konkav gekrümmt ist.

An den Umlenkabschnitt 6 grenzt im Bereich der Deckwand 7 ein schachtartig nach oben ragender Kammerabschnitt 8 an, der sich oben zu einem Auslaß 9 öffnet.

Zwischen Auslaß 9 und dem oberen Rand der durchlässigen Bodenwand 4 erstreckt sich eine zweite Stirnwand 10, die einen deutlich größeren Neigungswinkel zur Horizontalen als die Bodenwand 4 aufweist. Die Stirnwand 10 begrenzt zugleich den schachtartigen Kammerabschnitt 9 und den zweiten Kammerabschnitt 3.

Außerdem sind der Kammerabschnitt 3 und der schachtartige Kammerabschnitt 8 von ebenen Seitenwänden 11, 12 begrenzt, deren Abstand mit zunehmender Entfernung von der Bodenwand 4 zunimmt, so daß sie diesen Kammerabschnitten eine Trichterform verleihen.

Schließlich ist noch auf eine schwenkbar in der Stirnwand 5 angeordnete Klappe 13 hinzuweisen, die zum Entleeren der Kammer 1 hochklappbar ist.

Diese Kammer 1 kann betrieben werden, indem das zu behandelnde kleinstückige Produkt bei geschlossener Klappe 13 durch den Auslaß 9 oder einen seitlich angebrachten Zufuhrstutzen eingefüllt wird. Dann wird durch die durchlässige Bodenwand 4 das Gas hineingedrückt. Die Durchlässe der Bodenwand 4 sind in den ersten Kammerabschnitt 2 etwa spitzwinklig auf die Stirnwand 5 gerichtet. Infolgedessen schleudert das Gas das oberhalb der Bodenwand 4 befindliche kleinstückige Produkt nach oben. Infolge der Begrenzungen der Kammer 1 durch die erste Stirnwand 5 und den Umlenkabschnitt 6 wird das kleinstückige Produkt in den Bereich des zweiten Kammerabschnittes 3 umgelenkt, wo es herabsinkt und über die zweite Stirnwand 10 und die Bodenwand 4 in den Aufsteigbereich nachrutscht. Dabei bildet sich ein Rotations-Wirbelbett aus, wobei die Rotationsebenen des kleinstückigen Produktes parallel zur Zeichenebene liegen. Überschüssiges Gas strömt aus dem Auslaß 9 ab und kann - gegebenenfalls nach Aussonderung unerwünschter Chargenbestandteile - zumindest teilweise im Kreis zurückgeführt werden. Nach der Behandlung wird das Gas abgestellt, worauf die Charge die zweite Stirnwand 10 und die Bodenwand 4 herabrutscht und durch Öffnen der Klappe 13 abgelassen werden kann.

Wenn das Volumen der Kammer 1 im Bereich des ersten Kammerabschnittes 2 konventionell bemessen ist, kann diese Kammer dennoch erheblich größere Chargen schonender verarbeiten, da sie im Bereich des zweiten Kammerabschnittes 3 eine größere Ausdehnung senkrecht zu den Rotationsebenen des Wirbelbettes hat. In Fig. lc sind die Unterschiede gegenüber einem konventionellen Fließbett-Röster veranschaulicht, der eine rechteckige Projektionsfläche A1 mit übereinstimmendem ersten Kammerabschnitt 2 aufweist. Bei der erfindungsgemäßen Vorrichtung kommt durch die seitlichen Flächen A2 und A2' beträchtliche Volumina hinzu, die von der Charge aufgefüllt werden können.

Bei der in Fig. 1d dargestellten Variante ist im Unterschied zu der zuvor beschriebenen keine ebene zweite Stirnwand 10 sondern eine nach innen konkave zweite Stirnwand 10' vorhanden. Hierdurch kann eine Vergleichmäßigung der Teilchenbewegung über den gesamten Querschnitt des zweiten Kammerabschnittes 3 gefördert werden und das Volumen des Kammerabschnittes 3 nochmals gesteigert werden.

Die Varianten der Fig. 1 haben den Vorteil, daß sie einen Aufbau unter Verwendung des ersten Kammerabschnittes 2 einer konventionellen Kammer ermöglichen.

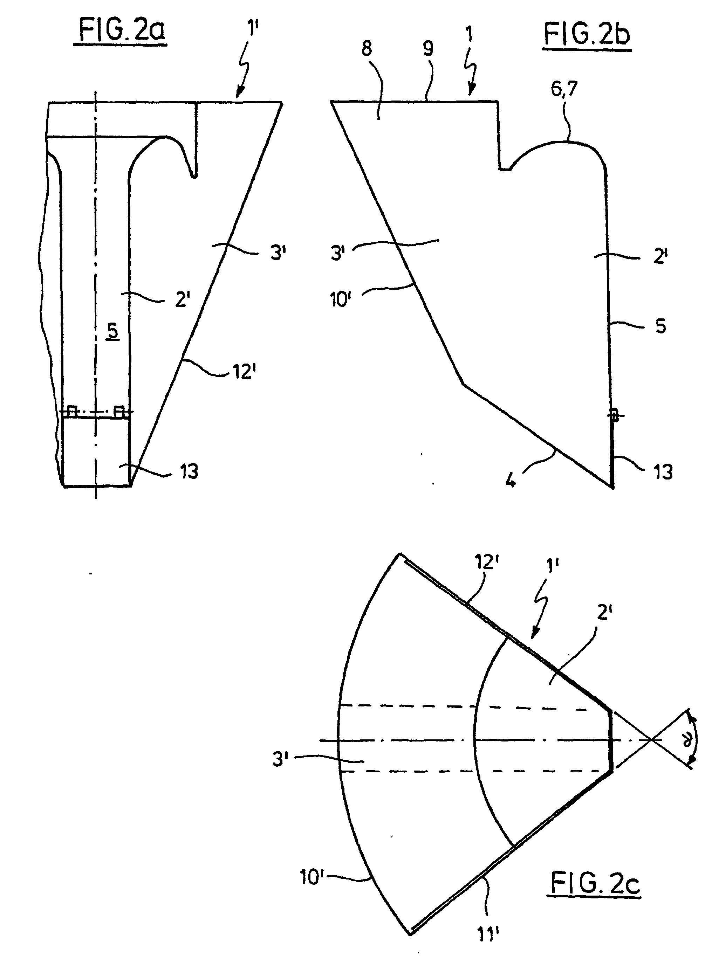

Die in Fig. 2 dargestellte Kammer 1' unterscheidet sich von der der Fig. 1d dadurch, daß die in der Horizontalen und auch in der Vertikalen divergierenden ebenen Seitenwände 11', 12' nicht nur den zweiten Kammerabschnitt 3' sondern auch den ersten Kammerabschnitt 2' begrenzen. Hierdurch wird eine weitere Vergleichmäßigung der Teilchenbewegung über den gesamten Querschnitt der Kammer erreicht, da Totzonen vermieden werden, die bei den Ausführungsbeispielen von Fig. 1 am "eckigen" Übergang zwischen erstem Kammerabschnitt 2 und zweitem Kammerabschnitt 3 entstehen können. Für den Betrieb der Kammer 1' gilt die obige Beschreibung. Durch die gleichmäßigere Ausnutzung der Kammer 1' ist jedoch ein gleichmäßigeres Produkt erreichbar.

Die Kammer 1' bildet ein Kreisringsegment mit dem Segmentwinkel α (hier etwa 75°). Mehrere solcher Kammern 1' können, um den Kreismittelpunkt angeordnet, zusammen einen Röster bilden. Dieser kann durch Zusammenstellung mehrerer identischer Kammern 1' oder durch Unterteilung einer Kammer durch radiale Zwischenwände erreicht werden. Befüllt und entleert wird ein entsprechender Röster durch eine besondere Ausbildung des inneren Rohres (Stirnwand 5). Dieses kann beispielsweise eine oder mehrere Öffnungen haben, die durch Verschieben eines in das innere Rohr eingesetzten Rohres geöffnet oder geschlossen werden kann.

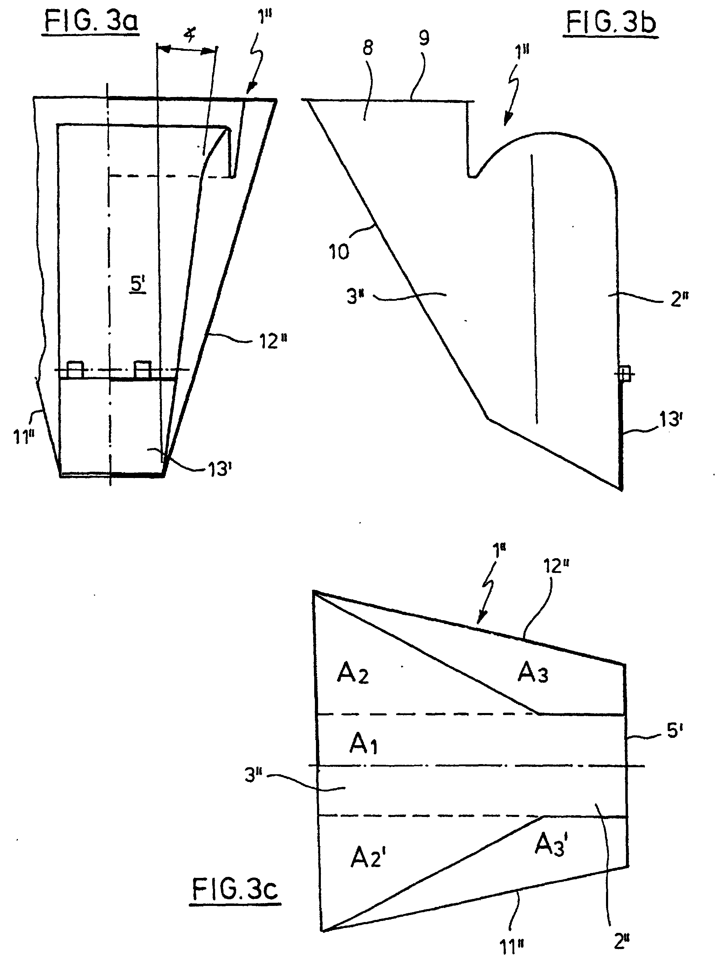

Die in Fig. 3 dargestellte Kammer 1''' hat ebenfalls Seitenwände 11'', 12'', die in der Horizontalen divergieren und auch in der Vertikalen divergieren, d.h. ausgestellt sind. Beide Seitenwände 11", 12" erstrecken sich über beide Kammerabschnitte 2", 3". Im Unterschied zu den vorstehenden Ausführungsbeispielen sind die Seitenwände 11", 12" bereits an der ersten Stirnwand 5' ausgestellt, so daß die erste Stirnwand 5' nicht rechteckig, sondern trapezförmig ist.

Hierdurch werden im Vergleich zu konventionellen Röstern mit einer rechteckigen Projektionsfläche A1 seitliche Flächen A2 und A2' und im Vergleich zur Kammer gemäß Fig. 1 zusätzliche seitliche Flächen A3 und A3' erzielt. Das Volumen der Kammer 1" ist also noch weiter vergrößert.

Bei dieser Ausführungsform ist die Klappe 13' in Anpassung an die erste Stirnwand 5' ebenfalls trapezförmig. Um die Entleerungsklappe im rechteckigen Format zu halten, können die Seitenwände 11", 12'' aber auch erst oberhalb der Entleerungsklappe 13' ausgestellt sein.

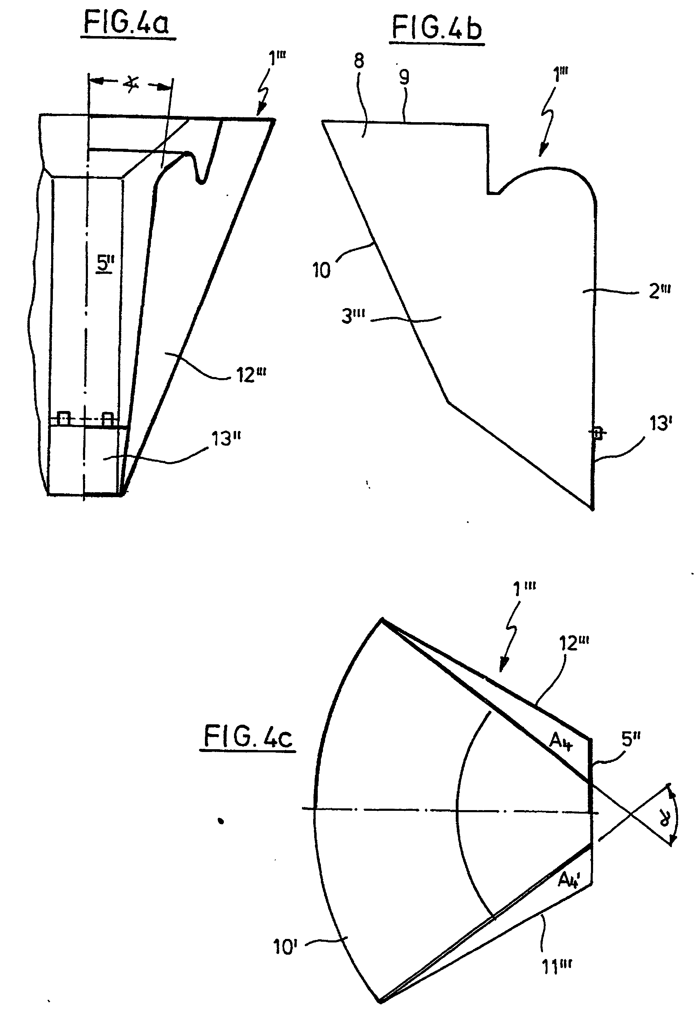

Das Ausführungsbeispiel der Fig. 4 hat im Unterschied zu dem der Fig. 2 Seitenwände 11''', 12''', die ebenfalls ausgehend von der ersten Stirnwand 5" ausgestellt sind. Auch in diesem Fall hat dafür die erste Stirnwand 5" eine Trapezform und ist im unteren Bereich mit einer trapezförmigen Klappe 13" bestückt. Auch hier sind die Seitenwände 11''', 12''' nach außen gewölbt.

Die Projektionsfläche der Kammer 1''' ist gegenüber derjenigen der Kammer 1' um die Flächen A4, A4' vergrößert, so daß das Volumen der Kammer 1''' entsprechend vergrößert ist.

Die Kammern 1", 1''' haben durch das gesteigerte Volumen ein weiter vergrößertes Leistungspotential.

## Patentansprüche

1. Vorrichtung zum Rösten, Trocknen und/oder Kühlen von Kaffeebohnen oder anderen kleinstückigen Produkten mit einer Kammer (1), in der mittels eines Gases und/oder eines Rührwerkes ein Rotations-Wirbelbett mit vertikalen Rotationsebenen erzeugt wird, wobei die Kammer einen Einlaß (4) und einen Auslaß (9) zum Leiten eines Gases zum Rösten, Trocknen und/oder Kühlen und gegebenenfalls Erzeugen des Wirbelbettes im wesentlichen durch einen in Rotationsrichtung erstreckten ersten Wirbelbettabschnitt aufweist und die Kammer (1) in einem ersten Kammerabschnitt (2) für die Aufnahme des ersten Wirbelbettabschnittes in senkrechter Richtung zu den Rotationsebenen des Wirbelbettes eine geringere Ausdehnung als in einem zweiten Kammerabschnitt (3) für die Aufnahme des zweiten Wirbelbettabschnittes hat, durch den das Gas im wesentlichen nicht geleitet wird.

2. Vorrichtung nach Anspruch 1, bei der der Einlaß für das Gas von einer durchlässigen Bodenwand (4) der Kammer (1) gebildet ist

3. Vorrichtung nach Anspruch 2, bei der der erste Kammerabschnitt (2) von der durchlässigen Bodenwand (4) begrenzt ist.

4. Vorrichtung nach Anspruch 2 oder 3, bei der die Durchlässe der durchlässigen Bodenwand (4) in den ersten Kammerabschnitt (2) gerichtet sind.

5. Vorrichtung nach einem der Ansprüche 2 bis 4, bei der die durchlässige Bodenwand (4) nach unten geneigt ist.

6. Vorrichtung nach einem der Ansprüche 2 bis 5, bei der auf dem tiefsten Niveau der durchlässigen Bodenwand (4) ein verschließbarer Auslaß (13) für das kleinstückige Produkt angeordnet ist.

7. Vorrichtung nach einem der Ansprüche 2 bis 6, bei der der erste Kammerabschnitt (2) von einer etwa vertikal nach oben ragenden ersten Stirnwand (5) begrenzt ist.

8. Vorrichtung nach einem der Ansprüche 6 bis 7, bei der der verschließbare Auslaß eine schwenkbare Klappe (13) in der ersten Stirnwand aufweist.

9. Vorrichtung nach einem der Ansprüche 1 bis 8, bei der eine Deckwand (7) der Kammer (1) einen den ersten Kammerabschnitt (2) oben begrenzenden, zu dessen Inneren hin konkaven Umlenkabschnitt (6) hat.

10. Vorrichtung nach Anspruch 7 und/oder 9, bei der die erste Stirnwand (5) an die durchlässige Bodenwand (4) und/oder der gekrümmte Umlenkabschnitt (6) an die erste Stirnwand (5) angrenzt.

11. Vorrichtung nach einem der Ansprüche 1 bis 10, bei der die Kammer (1) in der Deckwand (7) den Auslaß (9) für das Gas hat.

12. Vorrichtung nach Anspruch 11, bei der der Auslaß (9) neben dem Umlenkabschnitt (6) der Deckwand (7) angeordnet ist.

13. Vorrichtung nach Anspruch 11 oder 12, bei der Auslaß (9) am oberen Ende eines schachtartig nach oben ragenden Kammerabschnittes (8) ausgebildet ist

14. Vorrichtung nach einem der Ansprüche 1 bis 13, bei der an einen weiteren Rand der durchlässigen Bodenwand (4) eine undurchlässige zweite Stirnwand (10) angrenzt, die den zweiten Kammerabschnitt (3) begrenzt.

15. Vorrichtung nach Anspruch 14, bei der die zweite Stirnwand (10) von der durchlässigen Bodenwand (4) weg nach oben geneigt ist.

16. Vorrichtung nach einem der Ansprüche 1 bis 15, bei der die Ausdehnung der Kammer (1) in senkrechter Richtung zu den Rotationsebenen in der Richtung vom ersten Kammerabschnitt (2) zum zweiten Kammerabschnitt (3) zunimmt.

17. Vorrichtung nach Anspruch 16, bei der der erste Kammerabschnitt (2) einen im wesentlichen rechteckigen Querschnitt hat und die Ausdehnung der Kammer (1) senkrecht zur Rotationsebene nur im Bereich des zweiten Kammerabschnittes (3) zunimmt.

18. Vorrichtung nach Anspruch 16, bei der die Ausdehnung der Kammer (1') in senkrechter Richtung zu den Rotationsebenen ausgehend von der ersten Stirnwand (5) mit zunehmendem Abstand von dieser zunimmt.

19. Vorrichtung nach einem der Ansprüche 1 bis 18, bei der in einer Horizontal- und/oder in einer Vertikalebene divergierende Seitenwände (11, 12) die Kammer (1) seitlich begrenzen.

20. Vorrichtung nach Anspruch 19, bei der die Seitenwände eben oder gewölbt sind.

21. Vorrichtung nach einem der Ansprüche 1 bis 20, bei der die Kammer (1) nach oben hin trichterförmig erweitert ist.

22. Vorrichtung nach Anspruch 21, bei der die Kammer (1) lediglich in dem zweiten Kammerabschnitt (3) und/oder in dem schachtartigen Kammerabschnitt (8) trichterförmig nach oben erweitert ist.

23. Vorrichtung nach einem der Ansprüche 1 bis 22, bei der die Kammer (1') einen kreissegmentförmigen oder einen kreisringsegmentförmigen Querschnitt hat.

24. Vorrichtung nach Anspruch 23, bei der mehrere kreissegmentförmige oder kreisringsegmentförmige Kammern (1') in einem gemeinsamen Kreismittelpunkt angeordnet sind.

25. Vorrichtung nach Anspruch 23, bei der die Kammer (1) durch radiale Zwischenwände (11', 12') segmentiert ist.

26. Vorrichtung nach einem der Ansprüche 1 bis 25, bei der die zweite Stirnwand (10) der Kammer eben ist.

27. Vorrichtung nach einem der Ansprüche 1 bis 26, bei der die zweite Stirnwand (10') der Kammer (1) zum Inneren der Kammer hin konkav ist.

## Claims

1. Device for roasting, drying and/or cooling coffee beans or other small sized products with a chamber (1), in which a circulating fluidized bed with vertical circulation planes is generated by means of a gas and/or an agitating machine, the chamber having an inlet (4) and an outlet (9) for guiding a gas for roasting, drying and/or cooling and, if the case may be, generation of the fluidized bed, essentially through a first portion of the fluidized bed extending into the circulation direction, and the chamber (1), in a first chamber portion (2) for the accommodation of the first fluidized bed portion, has a smaller extension in the direction perpendicular to the circulation planes of the fluidized bed than in a second chamber portion (3) for the accommodation of the second fluidized bed portion, through which the gas is essentially not guided through.

2. Device according to claim 1, in which the inlet for the gas is formed by a permeable bottom wall (4) of the chamber (1).

3. Device according to claim 2, in which the first chamber portion (2) is delimited by the permeable bottom wall (4).

4. Device according to claim 2 or 3, in which the passages of the permeable bottom wall (4) are directed into the first chamber portion (2).

5. Device according to one of claims 2 to 4, in which the permeable bottom wall is downwardly inclined.

6. Device according to one of claims 2 to 5, in which a lockable outlet (13) for the small-sized product is disposed on the deepest level of the permeable bottom wall (4).

7. Device according to one of claims 2 to 6, in which the first chamber portion (2) is delimited by a first front wall (5) projecting approximately vertically upward.

8. Device according to one of claims 6 to 7, in which the lockable outlet is provided with a swingable flap (13) in the first front wall.

9. Device according to one of claims 1 to 8, in which a cover wall (7) of the chamber (1) has a deviating portion (6), delimiting the first chamber portion (2) at the top and being concave towards its interior.

10. Device according to claim 7 and/or 9, in which the first front wall (5) abuts on the permeable bottom wall (4), and/or the curved deviating portion (6) abuts on the first front wall (5).

11. Device according to one of claims 1 to 10, in which the chamber (1) has the outlet (9) for the gas in the cover wall (7).

12. Device according to claim 11, in which the outlet (9) is disposed alongside the deviating portion (6) of the cover wall (7).

13. Device according to claim 11 or 12, in which the outlet (9) is formed on the upper end of a shaft-like upward projecting chamber portion (8).

14. Device according to one of claims 1 to 13, in which a not permeable second front wall (10) delimiting the second chamber portion (3) abuts on a further edge of the permeable bottom wall (4).

15. Device according to claim 14, in which the second front wall (10) is inclined upward, away from the permeable bottom wall (4).

16. Device according to one of claims 1 to 15, in which the extension of the chamber (1) in the direction perpendicular to the circulation planes increases in the direction from the first chamber portion (2) to the second chamber portion (3).

17. Device according to claim 16, in which the first chamber portion (2) has an essentially rectangular cross section and the extension of the chamber (1) vertical to the circulation plane increases only in the region of the second chamber portion (3).

18. Device according to claim 16, in which the extension of the chamber (1') in the direction perpendicular to the circulation planes increases departing from the first front wall (5) with increasing distance from the latter.

19. Device according to one of claims 1 to 18, in which side walls (11, 12) diverging in a horizontal and/or vertical plane delimit the chamber (1) laterally.

20. Device according to claim 19, in which the side walls are plane or curved.

21. Device according to one of claims 1 to 20, in which the chamber (1) is funnel-like expanded towards the upside.

22. Device according to claim 21, in which the chamber (1) is funnel-like expanded towards the upside only in the second chamber portion (3) and/or the shaft-like chamber portion (8).

23. Device according to one of claims 1 to 22, in which the chamber (1') has a cross section shaped like a segment of a circle or like a segment of an annulus.

24. Device according to claim 23, in which several circle segment or annulus segment shaped chambers (1') are disposed around a common centre of a circle.

25. Device according to claim 23, in which the chamber (1) is segmented through radial partition walls (11', 12').

26. Device according to one of claims 1 to 25, in which the second front wall (10) of the chamber is plain.

27. Device according to one of claims 1 to 26, in which the second front wall (10') of the chamber (1) is concave towards the interior of the chamber.

## Revendications

1. Dispositif pour griller, sècher et/ou refroidir des grains de café ou d'autres produits de petite taille, avec une chambre (1) dans laquelle un lit fluidisé circulant avec des plaines de circulation verticales est généré au moyen d'un gaz et/ou d'un dispositif d'agitation, la chambre ayant une entrée (4) et une sortie (9) pour guider un gaz pour griller, sècher et/ou refroidir et, le cas échéant, pour générer le lit fluidisé, essentiellement à travers une première portion du lit fluidisé s'étendant en direction de la circulation, et la chambre (1), dans une première portion de chambre (2) pour la réception de la première portion du lit fluidisé, a dans une direction perpendiculaire aux plaines de circulation du lit fluidisé une extension inférieure à celle dans une deuxième portion de chambre (3) pour la réception de la seconde portion du lit fluidisé, à travers laquelle le gaz n'est pas guidé essentiellement.

2. Dispositif selon la revendication 1, dans lequel l'entrée pour le gaz est formée par une paroi de fond perméable (4) de la chambre (1).

3. Dispositif selon la revendication 2, dans lequel la première portion de chambre (2) est délimitée par la paroi de fond perméable (4).

4. Dispositif selon la revendication 2 ou 3, dans lequel les passages de la paroi de fond perméable (4) sont dirigés vers la première portion de chambre (2).

5. Dispositif selon l'une quelconque des revendications 2 à 4, dans lequel la paroi de fond perméable (4) est inclinée en contrebas.

6. Dispositif selon l'une quelconque des revendications 2 à 5, dans lequel une sortie obturable (13) pour le produit de petite taille est disposée sur le niveau le plus bas de la paroi de fond perméable (4).

7. Dispositif selon l'une quelconque des revendications 2 à 6, dans lequel la première portion de chambre (2) est délimitée par une première paroi frontale (5) saillant à peu près verticalement en haut.

8. Dispositif selon l'une quelconque des revendications 6 à 7, dans lequel la sortie obturable est pourvu d'un clapet pivotable (13) dans la première paroi frontale.

9. Dispositif selon l'une quelconque des revendications 1 à 8, dans lequel une paroi de couverture (7) de la chambre (1) a une portion de détournement (6) délimitant la première portion de chambre (2) dans le haut, étant concave en direction de l'intérieur de celle-ci.

10. Dispositif selon la revendication 7 et/ou 9, dans lequel la première paroi frontale (5) aboutit à la paroi de fond perméable (4) et/ou la portion de détournement courbée (6) aboutit à la première paroi frontale (5).

11. Dispositif selon l'une quelconque des revendications 1 à 10, dans lequel la chambre (1) a la sortie (9) pour le gaz dans la paroi de couverture (7).

12. Dispositif selon la revendication 11, dans lequel la sortie (9) est disposé à coté de la portion de détournement (6) de la paroi de couverture (7).

13. Dispositif selon la revendication 1 ou 12, dans lequel la sortie (9) est formée dans l'extrémité supérieure d'une portion de chambre (8) saillante vers le haut en forme de puits.

14. Dispositif selon l'une quelconque des revendications 1 à 13, dans lequel une deuxième paroi frontale imperméable (10) aboutit à un bord additionnel de la paroi de fond perméable (4), ladite deuxième paroi frontale délimitant la deuxième portion de chambre (3).

15. Dispositif selon la revendication 14, dans lequel la deuxième paroi frontale (10) est inclinée en haut, à l'écart de la paroi perméable de fond (4).

16. Dispositif selon l'une quelconque des revendications 1 à 15, dans lequel l'extension de la chambre (1) en direction perpendiculaire aux plaines de circulation augmente dans la direction de la première portion de chambre (2) vers la deuxième portion de chambre (3).

17. Dispositif selon la revendication 16, dans lequel la première portion de chambre (2) a un profil essentiellement rectangulaire et l'extension verticale à la plaine de circulation de la chambre (1) augmente seulement dans la région de la deuxième portion de chambre (3).

18. Dispositif selon la revendication 16, dans lequel l'extension de la chambre (1') en direction perpendiculaire aux plaines de circulation augmente partant de la première paroi frontale (5), avec distance croissante de celle-ci.

19. Dispositif selon l'une quelconque des revendications 1 à 18, dans lequel des parois latérales (11, 12), divergentes dans une plaine horizontale et/ou verticale, délimitent latéralement la chambre (1).

20. Dispositif selon la revendication 19, dans lequel les parois latérales sont plans ou courbées.

21. Dispositif selon l'une quelconque des revendications 1 à 20, dans lequel la chambre (1) est élargie vers le haut en forme d'entonnoir.

22. Dispositif selon la revendication 21, dans lequel la chambre (1) est élargie vers le haut en forme d'entonnoir seulement dans la deuxième portion de chambre (3) et/ou dans la portion de chambre en forme de puits (8).

23. Dispositif selon l'une quelconque des revendications 1 à 22, dans lequel la chambre (1') a un profil en forme de segment de cercle ou de segment d'anneau circulaire.

24. Dispositif selon la revendication 23, dans lequel plusieurs chambres en forme de segment de cercle ou de segment d'anneau circulaire (1') sont disposées autour d'un centre de cercle commun.

25. Dispositif selon la revendication 23, dans lequel la chambre (1) est segmentée par des cloisons radiaux (11', 12')

26. Dispositif selon l'une quelconque des revendications 1 à 25, dans lequel la deuxième paroi frontale (10) de la chambre est plane.

27. Dispositif selon l'une quelconque des revendications 1 à 26, dans lequel la deuxième paroi frontale (10) de la chambre (1) est concave vers l'intérieur de la chambre.
